# EUROPÄISCHE PATENTSCHRIFT

(11) **EP 3 063 449 B1**
(45) Veröffentlichungstag und Bekanntmachung des Hinweises auf die Patenterteilung: **28.11.2018**
(21) Anmeldenummer: 14736610.8
(22) Anmeldetag: 18.06.2014
(51) Int. Cl.: E03C 1/02, F16L 33/207

(54) **SCHLAUCHLEITUNG SOWIE VERFAHREN ZUR HERSTELLUNG EINER SCHLAUCHLEITUNG**
HOSE LINE AND METHOD FOR PRODUCING A HOSE LINE
TUYAU FLEXIBLE ET SON PROCÉDÉ DE FABRICATION

(30) Priorität: 31.10.2013 DE 202013009630 U
(43) Veröffentlichungstag der Anmeldung: 07.09.2016
(73) Patentinhaber: Neoperl GmbH, 79379 Müllheim (DE)
(72) Erfinder: WILDFANG, Fabian, 79379 Müllheim (DE)
(74) Vertreter: Börjes-Pestalozza, Henrich
(86) Internationale Anmeldenummer: PCT/EP2014/001657
(87) Internationale Veröffentlichungsnummer: WO 2015/062678

(56) Entgegenhaltungen:
- EP-A1- 0 267 709
- DE-A1-102007 026 394
- US-A- 1 954 989
- US-A- 2 570 477
- US-A- 4 548 430

## Beschreibung

Die Erfindung betrifft eine Schlauchleitung gemäß Anspruch 1 mit einem flexiblen Schlauch sowie mit zumindest einem Schlauchanschluss, der ein Anschlussstück mit einem Anschlussnippel aufweist, auf welchen Anschlussnippel ein Schlauchende eines flexiblen Schlauches aufgeschoben ist, und der eine Quetschhülse hat, die das Schlauchende zwischen sich und dem Anschlussnippel in Nippel-Längsrichtung unverrückbar einspannt, wobei der Schlauchanschluss zumindest zwei, auf gegenüberliegenden Seiten des Schlauchanschlusses an der Quetschhülse angeordnete Werkzeugangriffsflächen aufweist, und wobei die zumindest zwei Werkzeugangriffsflächen ohne ein Abformen des Anschlussnippels allein als beim Vercrimpen der Quetschhülse am Anschlussstück gebildete Verformungen oder Einformungen der Quetschhülse ausgestaltet sind.

Die vorliegende Erfindung befasst sich auch mit einem Verfahren zur Herstellung einer Schlauchleitung gemäss Anspruch 9 mit einem hülsenförmigen Anschlussstück, dessen eines Hülsenende als Anschlussnippel ausgebildet ist, auf den ein Schlauchende eines flexiblen Schlauches aufgeschoben wird, bevor das auf den Nippel aufgeschobene Schlauchende durch Vercrimpen einer Quetschhülse gesichert wird.

Aus der EP 0 267 709 A1 ist bereits eine gattungsgemäße Schlauchleitung mit zumindest einem Schlauchanschluss vorbekannt, der ein Anschlussstück mit einem Anschlussnippel aufweist, auf welchen Anschlussnippel ein Schlauchende eines flexiblen Schlauches aufgeschoben ist. Der Anschlussnippel sowie das auf ihn aufgeschobene Schlauchende wird von einer Quetschhülse umgriffen, die von einem unverformten Zustand in einen verformten Zustand kleineren lichteren Hülsenquerschnitts vercrimpbar ist. Dabei spannt die Quetschhülse das Schlauchende zwischen sich und dem Anschlussnippel in Nippel-Längsrichtung unverrückbar ein. Oberhalb des das Schlauchende umspannenden Teilbereiches der Quetschhülse sind an diese zwei Werkzeugangriffsflächen angeformt, die auf gegenüberliegenden Seiten an der Quetschhülse vorgesehen sind. Während beim Vercrimpen der Quetschhülse zwischen den Pressbacken des Crimpwerkzeuges kleine Ausformungen entstehen, die durch Materialverdrängung während des Vercrimpens gebildet werden und als Werkzeugangriffsflächen für ein Drehwerkzeug völlig ungeeignet sind, ist der die Werkzeugangriffsflächen aufweisende Sechskant bereits in die unverformte Quetschhülse eingeformt und zum Formverpressen während des Vercrimpens weder vorgesehen noch geeignet.

Aus der DE 10 2007 026 394 A1 kennt man bereits eine Schlauchleitung mit einem Schlauchanschluss, der ein Anschlussstück mit einem Anschlussnippel aufweist. Auf den Anschlussnippel ist das Schlauchende einer flexiblen Schlauchleitung aufgeschoben und mit einer den Anschlussnippel sowie das auf ihn aufgeschobene Schlauchende umgreifenden Quetschhülse gesichert. Um eine drehbeanspruchbare Verbindung zwischen dem Anschlussnippel und dem auf ihn aufgeschobenen Schlauchende zu erzielen, ist die Quetschhülse derart unrund mit dem Anschlussnippel verpresst, dass eine drehfeste formschlüssige Verbindung zwischen der Quetschhülse und dem Anschlussnippel gegeben ist. Da eine drehbeanspruchbare Verbindung zwischen dem Anschlussnippel und dem auf ihn aufgeschobenen Schlauchende angestrebt wird, sind zusätzliche Werkzeugangriffsflächen an der Quetschhülse nicht vorgesehen.

In der US 4 548 430 A ist eine Schlauchleitung mit einem Schlauchanschluss vorbeschrieben, der ein Anschlussstück mit einem Anschlussnippel aufweist, auf welchen Anschlussnippel ebenfalls ein Schlauchende des flexiblen Schlauches aufgeschoben ist. Der Schlauchanschluss hat eine Quetschhülse, die das Schlauchende zwischen sich und dem Anschlussnippel in Nippel-Längsrichtung unverrückbar einspannt. Der Schlauchanschluss hat eine Werkzeugangriffsfläche, die mit Abstand von der Quetschhülse und dem von ihr umfassten Schlauchende oberhalb des Anschlussnippels am Schlauchanschluss vorgesehen ist. Soweit die Quetschhülse beim Vercrimpen in Teilbereichen eine im Querschnitt achteckige flächige Kontur erhält, sind diese achteckigen Teilbereiche als Werkzeugangriffsflächen weder vorgesehen noch geeignet.

Aus der US 2 570 477 A kennt man eine Schlauchleitung mit einem Anschlussstück, bei dem das auf das Anschlussstück aufgeschobene Schlauchende mittels einer Quetschhülse gesichert ist, die als Biegeformteil vorgefertigt wird. Die Quetschhülse hat an ihrem dem Schlauch abgewandten Hülsenende einen nach innen umgebogenen Randbereich, der eine sechseckige und als Werkzeugangriffsfläche dienende Außenkontur aufweist. Dabei dient die innenliegende und nach innen eingezogene Randzone gleichzeitig als Anschlagfläche, an welcher das Schlauchende anliegt. Die Herstellung dieser, mit dem sechseckigen Stirnrandbereich vorgefertigten Quetschhülse ist mit einem hohen Aufwand verbunden.

Aus der US 1 954 989 A kennt man eine Schlauchleitung mit einer Schlauchkupplung, die zum Verbinden eines sechseckig vorgefertigten Rohres bestimmt ist. Diese Schlauchleitung ist mit ihrem sechseckig vorgefertigten Rohr nur mit hohem Aufwand herstellbar und auf spezielle Anwendungen beschränkt.

Aus der DE 20 2006 015 598 U1 kennt man bereits eine Schlauchleitung mit zumindest einem Schlauchanschluss, der ein Anschlussstück mit einem Anschlussnippel aufweist. Auf den Anschlussnippel ist das Schlauchende eines flexiblen Schlauches aufgeschoben. Der vorbekannte Schlauchanschluss hat eine Quetschhülse, die das Schlauchende zwischen sich und dem Anschlussnippel in Nippel-Längsrichtung unverrückbar einspannt, wobei der Schlauchanschluss zumindest zwei auf gegenüberliegenden Seiten des Schlauchanschlusses angeordnete Werkzeugangriffsflächen aufweist. In dem über den Anschlussnippel vor-stehenden Teilbereich des Anschlussstückes ist eine Nut vor-gesehen, in welche die Quetschhülse mit einem nach innen verdickten Wandungsabschnitt eingreift. Am Anschlussstück sind außenumfangsseitig Schlüsselflächen zum Angriff eines Werkzeuges vorgesehen, wobei die Quetschhülse in ihrem verdickten Wandungsabschnitt einen, der Form der am Anschlussstück vorgesehenen Schlüsselflächen entsprechenden und an diese Schlüsselflächen formangepassten Mehrkant hat. Da die Quetschhülse des vorbekannten Schlauchanschlusses also die Form des am Anschlussstück vorgesehenen Mehrkants abzuformen hat, ist die Herstellung des vorbekannten Schlauchanschlusses und seines Anschlussstücks mit dem daran vorgesehenen Mehrkant vergleichsweise aufwändig.

Solche Schlauchleitungen werden beispielsweise auch verwendet, um die an einem Waschbecken vorgesehene Auslaufarmatur mit dem Eckventil einer Wasserversorgungsleitung zu verbinden. Da solche Waschbecken häufig auch in eine Küchenzeile eingepasst sind und da die Auslaufarmatur meist in unmittelbarer Nähe des Waschbeckens zu montieren ist, kann sich die Montage der Auslaufarmatur sowie der dazugehörigen Schlauchleitungen unter den unterhalb der Spüle herrschenden engen Platzverhältnissen sehr aufwändig und zeitraubend gestalten.

Es ist auch bereits eine Schlauchleitung bekannt, die an ihrem einen Schlauchende einen Schlauchanschluss aufweist, der ein hülsenförmiges Anschlussstück hat, dessen schlauchseitiges Ende als Anschlussnippel ausgebildet ist. Auf den außenumfangseitig konturierten Anschlussnippel ist ein Schlauchende eines flexiblen Schlauches aufgeschoben. Der Schlauchanschluss weist auch eine Quetschhülse auf, die das erwähnte Schlauchende zwischen sich und dem Anschlussnippel in Nippel-Längsrichtung unverrückbar einspannt und auf dem Schlauchnippel sichert. Das Anschlussstück ist als Schraubverbindung ausgebildet und weist einen Ringabsatz auf, den eine Überwurfmutter hintergreift. Diese Überwurfmutter hat ein Innengewinde, das auf ein am Eckventil vorgesehenes Außengewinde aufschraubbar ist. Dabei ist der Außenumfang der Überwurfmutter als Sechskant ausgebildet, dessen sechs Kantenflächen als einander paarweise zugeordnete Schlüsselangriffsflächen dienen. Um die Überwurfmutter mit ihrem Innengewinde fest und dicht auf das Außengewinde am Eckventil aufschrauben zu können, ohne dass sich dabei das Anschlussstück mitdrehen kann, sind auch in dem zwischen der Quetschhülse einerseits und der Überwurfmutter andererseits angeordneten Teilbereich des Anschlussstückes zumindest zwei, auf gegenüberliegenden Seiten angeordnete und einander paarweise zugeordnete Schlüsselangriffsflächen vorgesehen, an denen ein Konterschlüssel zum Ansatz gebracht werden kann.

Um den Konterschlüssel dort ansetzen zu können, muss dieser Teilbereich des Anschlussstückes vergleichsweise lang ausgebildet sein. Nachteilig ist jedoch, dass ein vergleichsweise langer Teilbereich gleichzeitig auch eine vergleichsweise große Einbaulänge erfordert, die unter beengten Platzverhältnissen nicht immer zur Verfügung steht. Darüber hinaus kann eine vergleichsweise große Einbaulänge einen entsprechend großen minimalen Krümmungsradius der Schlauchleitung zur Folge haben. Und schließlich sind die für den Konterschlüssel vorgesehenen Schlüsselangriffsflächen in einem vom Schlauch beabstandeten Teilbereich des Anschlussstückes vorgesehen, der unter beengten Platzverhältnissen nur schwierig mit einem Maulschlüssel erreichbar ist.

Es besteht daher die Aufgabe, eine Schlauchleitung der eingangs erwähnten Art zu schaffen, die insbesondere unter beengten Platzverhältnissen leicht montierbar und vielseitig einsetzbar ist. Darüber hinaus besteht auch die Aufgabe, ein Verfahren der eingangs erwähnten Art zu schaffen, das die einfache Herstellung einer leicht montierbaren und vielseitig einsetzbaren Schlauchleitung erlaubt.

Bei der eingangs erwähnten Schlauchleitung besteht die erfindungsgemäße Lösung darin, dass die zumindest zwei Werkzeugangriffsflächen in einem vercrimpten Teilbereich der Quetschhülse angeordnet sind, derart, dass dieser vercrimpte Teilbereich der Quetschhülse das Schlauchende über die Längserstreckung dieses vercrimpten Teilbereichs hinweg vollumfänglich umhüllt.

Die erfindungsgemäße Schlauchleitung weist einen flexiblen Schlauch auf, der an zumindest einem seiner beiden Schlauchenden einen Schlauchanschluss hat. Dieser Schlauchanschluss weist ein Anschlussstück mit einem Anschlussnippel auf, auf welchen Anschlussnippel das zugeordnete Schlauchende des flexiblen Schlauches aufgeschoben ist. Dem Schlauchanschluss ist eine Quetschhülse zugeordnet, die zumindest in einem Teilbereich ihrer Längserstreckung von einem unverformten Zustand in einen verformten Zustand kleineren lichten Hülsenquerschnitts vercrimpbar ist. In der vercrimpten Gebrauchsstellung spannt die Quetschhülse das Schlauchende zwischen sich und dem Anschlussnippel in Nippel-Längsrichtung unverrückbar ein. Am Schlauchanschluss sind zumindest zwei, auf gegenüberliegenden Seiten des Schlauchanschlusses angeordnete Werkzeugangriffsflächen vorgesehen, die erfindungsgemäß an der Quetschhülse angeordnet sind. Die zumindest zwei Werkzeugangriffsflächen sind dazu in einem vercrimpten Teilbereich der Quetschhülse angeordnet, und zwar derart, dass dieser vercrimpte Teilbereich der Quetschhülse das Schlauchende über die Längserstreckung dieses vercrimpten Teilbereiches hinweg vollumfänglich umhüllt. Da diese Werkzeugangriffsflächen an der Quetschhülse vorgesehen sind, kann der von der Quetschhülse umschlossene Teilbereich des Anschlussstückes unmittelbar an die am Anschlussstück befindliche Schlauchverbindung angrenzen, ohne dass dazwischen ein von der Quetschhülse freigehaltener Teilbereich des Anschlussstückes notwendig ist. Erfindungsgemäß ist vorgesehen, dass die zumindest zwei Werkzeugangriffsflächen ohne ein Abformen des Anschlussnippels allein als beim Vercrimpen der Quetschhülse am Anschlussstück gebildete Verformungen oder Einformungen der Quetschhülse ausgebildet sind. Da die zumindest zwei Werkzeugangriffsflächen in einem Abschnitt der Quetschhülse angeordnet sind, in welchem die Quetschhülse das Schlauchende vollumfänglich umhüllt, kann das elastische Material des innenseitig an der Quetschhülse anliegenden Schlauchendes die durch die Verformungen oder Einformungen der Quetschhülse beim Vercrimpen gebildeten Querschnittsveränderungen abfangen und aufnehmen, ohne dass die Quetschhülse sich am Anschlussnippel des Anschlussstückes abformen muss. Die als Werkzeugangriffsflächen gebildeten Verformungen oder Einformungen der Quetschhülse sichern das innenseitig an der Quetschhülse anliegende Schlauchende noch zusätzlich an dem im Schlauchinneren befindlichen Anschlussnippel. Der Schlauchanschluss kann daher vergleichsweise kurz und platzsparend ausgestaltet werden. Darüber hinaus wird der Abstand zwischen der am Anschlussstück vorgesehenen Schlauchverbindung der Schlauchleitung einerseits und dem Schlauch andererseits vergleichsweise gering gehalten, was die Montage vereinfachen kann. Da der Schlauchanschluss vergleichsweise kurz dimensioniert werden kann, lässt sich der minimale Biegeradius der Schlauchleitung vergleichsweise klein halten, was die vielseitige Einsetzbarkeit der erfindungsgemäßen Schlauchleitung begünstigt. Da das Anschlussstück vergleichsweise kurz ausgestaltet werden kann, ergibt sich auch eine nicht unwesentliche Materialersparnis; da derartige Anschlussstücke häufig aus Messing hergestellt werden, ist mit dieser Materialersparnis auch eine nicht unerhebliche Kostenersparnis erreichbar. Zudem wird bei dem vergleichsweise kurzen Anschlussstück auch der Herstellungsaufwand erheblich reduziert. Bei der Innenbearbeitung solcher Anschlussstücke ist nämlich die Werkzeugkühlung und die Späneabfuhr insbesondere bei langen Werkstücken problematisch; durch die Verkürzung des Anschlussstückes kann der Herstellungsaufwand bei dessen Innenbearbeitung erheblich reduziert werden.

Die Erfindung sieht vor, dass die zumindest zwei Werkzeugangriffsflächen einander paarweise zugeordnet sind.

Gemäß der Erfindung sind die zumindest zwei Werkzeugangriffsflächen als Schlüsselangriffsflächen für einen Maulschlüssel ausgebildet.

Um auch einen üblichen Maulschlüssel sicher an der Quetschhülse ansetzen zu können, ist vorgesehen, dass die zumindest zwei Schlüsselangriffsflächen sich über mehr als die Hälfte der Längserstreckung und vorzugsweise über die gesamte Längserstreckung der Quetschhülse erstrecken. Insbesondere wenn sich die zumindest zwei Werkzeugangriffsflächen nahezu über die gesamte Längserstreckung der Quetschhülse erstrecken, lässt sich der als Konterwerkzeug bestimmte Maulschlüssel gut an den Werkzeugangriffsflächen ansetzen, ohne dass diese unter beengten Platzverhältnissen aufwändig gesucht werden müssten. Zum Einarbeiten der Werkzeugangriffsflächen in die Quetschhülse wird ein Herstellungsverfahren verwendet, bei welchem die Werkzeugangriffsflächen durch entsprechendes Verformen der Quetschhülse in diese eingeformt werden. Da das Vercrimpen der Quetschhülse ohnehin ein Verformen dieser Quetschhülse erfordert, ist erfindungsgemäß vorgesehen, dass die zumindest zwei Schlüsselangriffsflächen in einem vercrimpten Teilbereich der Quetschhülse angeordnet sind. Bei der erfindungsgemäßen Schlauchleitung wird also das Vercrimpen der Quetschhülse gleichzeitig auch dazu genutzt, die benötigten Werkzeugangriffsflächen in die Quetschhülse einzuformen.

Um das Schlauchende des flexiblen Schlauches fest und sicher auf dem Schlauchnippel des Anschlussstückes zu sichern, kann es erforderlich sein, dass die im Querschnitt runde Quetschhülse das Schlauchende mit einem nahezu gleichbleibenden Innenquerschnitt umgreift.

Eine bevorzugte Ausführungsform gemäß der Erfindung sieht vor, dass der die zumindest zwei Werkzeugangriffsflächen aufweisende Teilbereich der Quetschhülse deren schlauchseitiges Hülsenende bildet. Diese Ausführungsform bietet den Vorteil, dass das Konterwerkzeug auch unter beengten Platzverhältnissen leicht an der Quetschhülse angesetzt werden kann.

Um einen Maulschlüssel leicht und bequem an der Quetschhülse ansetzen zu können, ohne die dazu benötigten Schlüsselangriffsflächen langwierig am Umfang dieser Quetschhülse suchen zu müssen, kann es vorteilhaft sein, wenn wenigstens zwei und vorzugsweise drei Paare einander zugeordneter und in einer gemeinsamen Querschnittsebene der Quetschhülse angeordnete Schlüsselangriffsflächen vorgesehen sind. Insbesondere eine Ausführung, bei welcher drei Paare einander zugeordneter Schlüsselangriffsflächen vorgesehen sind, weist eine schraubenmutter-ähnliche Außenkontur auf, an der der Maulschlüssel in verschiedenen Winkelstellungen auch unter beengten Platzverhältnissen immer wieder gut angesetzt werden kann.

Dabei ist es besonders vorteilhaft, wenn benachbarte Schlüsselangriffsflächen einen Winkel von 60° oder von 90° einschließen.

Um die zwischen dem Schlauchanschluss einerseits und einem Eckventil oder dergleichen benachbarten Leitungsabschnitt andererseits vorgesehene Schlauchverbindung festziehen zu können, ist es vorteilhaft, wenn auch das Anschlussstück in einem von der Quetschhülse freigehaltenen Teilbereich zumindest zwei, vorzugsweise einander paarweise zugeordnete und insbesondere als Schlüsselangriffsflächen ausgestaltete Werkzeugangriffsflächen hat.

Das Anschlussstück kann eine Anschlussöse aufweisen, in der eine Durchflussöffnung der Schlauchleitung mündet. Eine bevorzugte Weiterbildung gemäß der Erfindung sieht jedoch vor, dass am Anschlussstück ein Ringabsatz vorgesehen ist, den eine Überwurfmutter hintergreift und dass die Überwurfmutter außenumfangsseitig zumindest zwei, vorzugsweise einander paarweise zugeordnete und insbesondere als Schlüsselangriffsflächen ausgebildete Werkzeugangriffsflächen hat.

Damit die erfindungsgemäße Schlauchleitung auch höheren Berstdrücken ausgesetzt werden kann und damit das elastische Material des flexiblen Schlauches gegen äußere Einwirkungen gut geschützt ist, ist es vorteilhaft, wenn die Schlauchleitung mehrlagig ausgebildet ist und wenn zumindest ein Innenschlauch vorgesehen ist, den ein Geflecht und insbesondere ein Metallgeflecht umhüllt.

Bei dem Verfahren der eingangs erwähnten Art besteht die erfindungsgemäße Lösung darin, dass die Quetschhülse beim Vercimpen ohne ein Abformen des Anschlussnippels in einem das Schlauchende vollumfänglich umhüllenden Abschnitt derart verformt wird, dass sich zumindest zwei Werkzeugangriffsflächen bilden, und dass die zumindest zwei Werkzeugangriffsflächen in einem vercrimpten Teilbereich der Quetschhülse angeordnet sind, derart, dass dieser vercrimpte Teilbereich der Quetschhülse das Schlauchende über die Längserstreckung dieses vercrimpten Teilbereiches hinweg vollumfänglich umhüllt.

Da das Vercrimpen der Quetschhülse ohnehin ein Verformen dieser Quetschhülse erfordert, kann eine bevorzugte Vorgehensweise darin bestehen, dass die Werkzeugangriffsflächen beim Vercrimpen wenigstens bereichsweise in einen vercrimpten Teilbereich der Quetschhülse eingeformt werden.

Dabei sieht eine bevorzugte Vorgehensweise vor, dass die zumindest zwei Werkzeugangriffsflächen als einander paarweise zugeordnete Schlüsselangriffsflächen ausgebildet oder ausgeformt werden.

Weiterbildungen gemäß der Erfindung ergeben sich aus den Ansprüchen in Verbindung mit der Zeichnung sowie der Beschreibung. Nachstehend wird die Erfindung anhand bevorzugter Ausführungsbeispiele noch näher beschrieben.

Es zeigt:
- Figur 1:: eine in einer perspektivischen Gebrauchsstellung gezeigte Schlauchleitung im Bereich eines Schlauchanschlusses, welcher Schlauchanschluss mit einem Eckventil einer Wasserleitung verbunden ist,
- Figur 2:: den Schlauchanschluss der in Figur 1 gezeigten Schlauchleitung, wobei an einer mit dem Eckventil verbundenen Überwurfmutter des Schlauchanschlusses ein Maulschlüssel angreift, der zum Drehen der Schraubverbindung bestimmt ist und wobei ein weiterer Maulschlüssel als Konterschlüssel an einer Quetschhülse angesetzt ist, welcher das eine Schlauchende eines flexiblen Schlauches der Schlauchleitung am Schlauchanschluss festhält und sichert,
- Figur 3:: die Schlauchleitung aus Figur 1 und 2 in einer Seitenansicht im Bereich ihres Schlauchanschlusses,
- Figur 4:: die Schlauchleitung aus Figur 1 bis 3 in einem Querschnitt durch Schnittebene IV-IV in Figur 3,
- Figur 5:: die Schlauchleitung aus Figur 1 bis 4 in einem Längsschnitt,
- Figur 6:: die Schlauchleitung aus Figur 1 bis 5 in einer perspektivischen Darstellung,
- Figur 7:: eine in einer perspektivischen Darstellung gezeigte und an dem Eckventil einer Wasserleitung montierte Schlauchleitung, die sich von der in Figur 1 bis 6 gezeigten Schlauchleitung im wesentlichen nur durch die Anordnung der für den als Konterwerkzeug bestimmten Maulschlüssel vorgesehenen Schlüsselangriffsflächen an der Quetschhülse unterscheidet,
- Figur 8:: die mit dem Eckventil verbundene Schlauchleitung aus Figur 7, wobei auch hier - wie in Figur 2 - an der Überwurfmutter einerseits und an der Quetschhülse andererseits jeweils ein Maulschlüssel angesetzt ist,
- Figur 9:: die Schlauchleitung aus Figur 7 und 8 in einer Seitenansicht,
- Figur 10:: die Schlauchleitung aus Figur 7 bis 9 in einem Querschnitt durch Schnittebene X-X in Figur 9,
- Figur 11:: die Schlauchleitung aus Figur 7 bis 10 in einem Längsschnitt,
- Figur 12:: die Schlauchleitung aus Figur 7 bis 11 in einer perspektivischen Draufsicht auf den Schlauchanschluss,
- Figur 13:: eine dem Stand der Technik entsprechende Schlauchleitung in einer Seitenansicht im Bereich ihres Schlauchanschlusses,
- Figur 14:: die Schlauchleitung aus Figur 13 in einem Querschnitt XIV-XIV in Figur 13,
- Figur 15:: die Schlauchleitung aus Figur 13 und 14 in einem Längsschnitt, und
- Figur 16:: die Schlauchleitung aus Figur 13 bis 15 in einer perspektivischen Draufsicht auf den Schlauchanschluss.

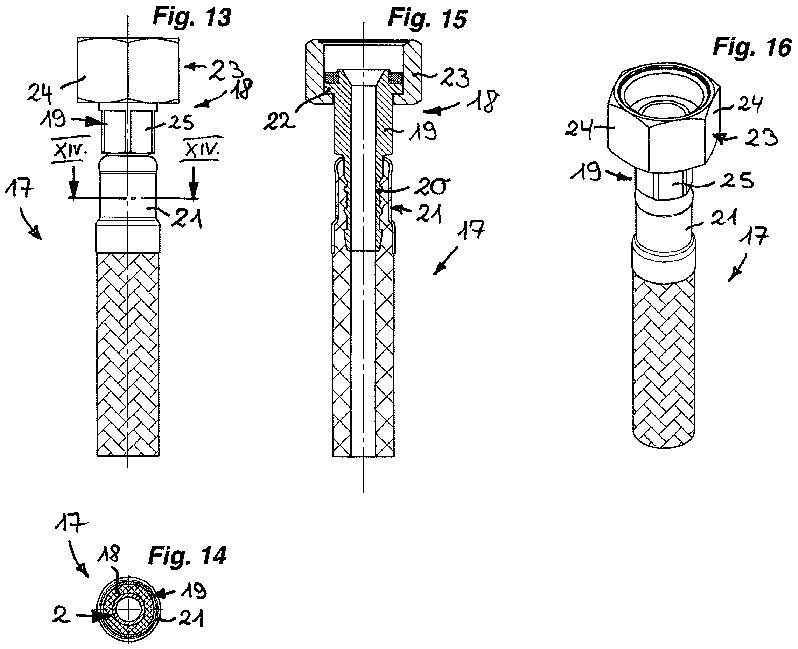

In den Figuren 13 bis 16 ist eine zum Stand der Technik zählende vorbekannte Schlauchleitung 17 dargestellt. Diese Schlauchleitung 17 weist zumindest an ihrem einen Leitungsende einen Schlauchanschluss 18 auf, der ein Anschlussstück 19 mit einem Anschlussnippel 20 hat. Auf den Anschlussnippel 20, der konturiert ist und beispielsweise mehrere, in Nippel-Längserstreckung voneinander beabstandete umlaufende Vor- und Rücksprünge aufweisen kann, ist ein Schlauchende eines flexiblen Schlauches 16 aufgeschoben. Der Schlauchanschluss 18 weist eine Quetschhülse 21 auf, die auf das am Anschlussnippel 20 gehaltene Schlauchende des Schlauches 16 aufgeschoben und anschließend dort derart vercrimpt wird, dass die Quetschhülse 6 das Schlauchende zwischen sich und dem Anschlussnippel 20 in Nippel-Längsrichtung unverrückbar einspannt. Am Anschlussstück 19 ist ein Ringabsatz 22 vorgesehen, den eine Überwurfmutter 23 hintergreift. Diese Überwurfmutter 23 weist eine schraubenmutter-ähnliche Außenkontur mit drei Paaren einander zugeordneter und auf gegenüberliegenden Seiten angeordneter Schlüsselangriffsflächen 24 auf. Um die Überwurfmutter 23 mit ihrem Innengewinde fest und dicht auf das Außengewinde eines benachbarten Leitungsabschnitts aufschrauben zu können, ohne dass sich dabei das Anschlussstück 19 mitdrehen kann, sind auch an dem zwischen Quetschhülse 21 und Überwurfmutter 23 vorgesehenen Teilbereiches des Anschlussstückes 19 einander paarweise zugeordnete Schlüsselangriffsflächen 25 vorgesehen, an denen ein als Konterwerkzeug dienender Maulschlüssel zum Ansatz gebracht werden kann. Um den als Konterwerkzeug dienenden Maulschlüssel dort ansetzen zu können, muss dieser, die Schlüsselangriffsflächen 25 aufweisende Teilbereich des Anschlussstückes 19 vergleichsweise lang ausgebildet sein. Nachteilig ist jedoch, dass ein vergleichsweiser langer Teilbereich gleichzeitig auch eine vergleichsweise große Einbaulänge erfordert, die unter beengten Platzverhältnissen nicht immer zur Verfügung steht. Darüber hinaus kann eine vergleichsweise große Einbaulänge einen entsprechend großen minimalen Krümmungsradius der Schlauchleitung 17 zur Folge haben. Und schließlich sind die Schlüsselangriffsflächen 25 in einem vom Schlauch 16 beabstandeten Teilbereich der Schlauchleitung 17 vorgesehen, wo die Schlüsselangriffsflächen 25 unter beengten Platzverhältnissen häufig kaum noch gut erreichbar sind.

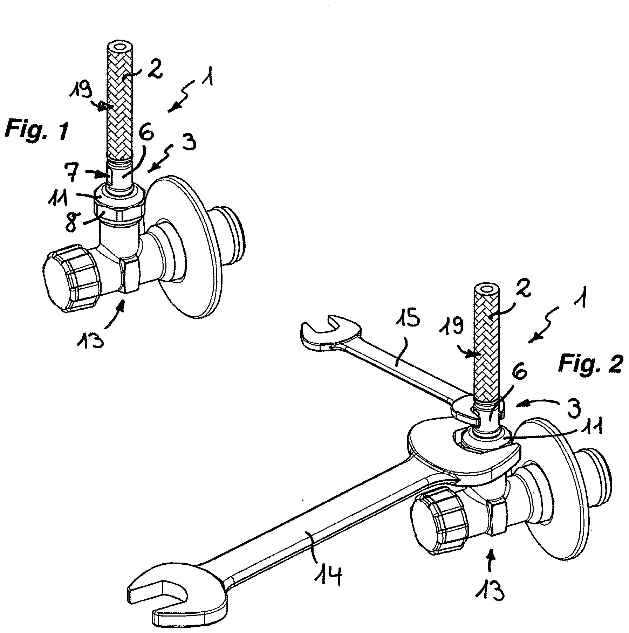

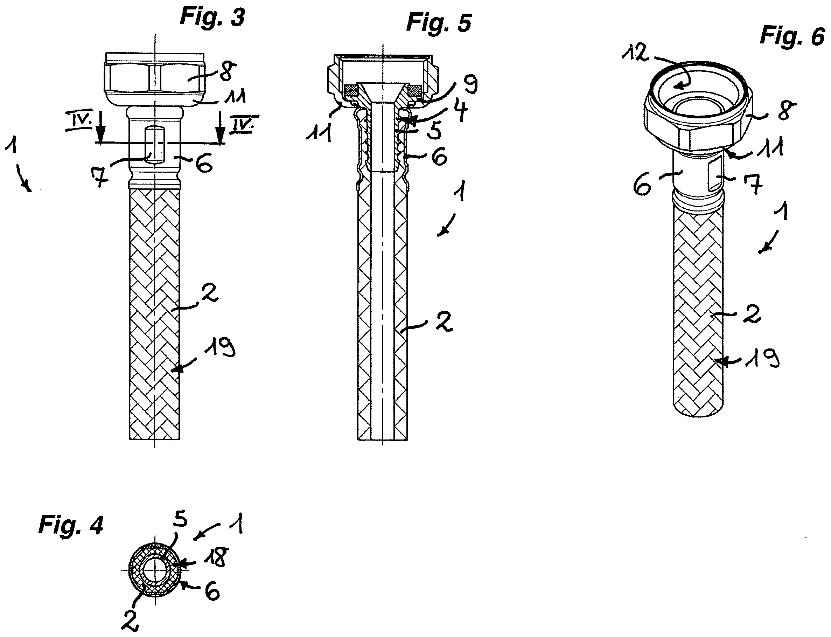

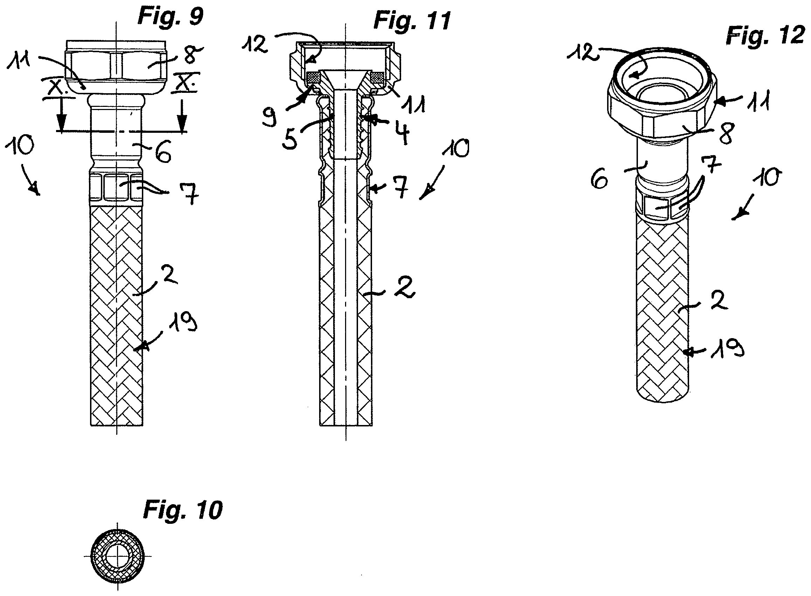

In den Figuren 1 bis 12 sind zwei verschiedene Ausführungen 1, 10 einer erfindungsgemäßen Schlauchleitung dargestellt. Die Schlauchleitungen 1, 10 weisen einen flexiblen Schlauch 2 auf, der an zumindest einem seiner beiden Schlauchenden einen Schlauchanschluss 3 hat. Dieser Schlauchanschluss 3 weist ein Anschlussstück 4 mit einem Anschlussnippel 5 auf, auf welchen Anschlussnippel 5 das zugeordnete Schlauchende des flexiblen Schlauches 2 aufgeschoben ist. Dem Schlauchanschluss 3 ist eine Quetschhülse 6 zugeordnet, die zumindest in einem Teilbereich ihrer Längserstreckung von einem unverformten Zustand in einen verfomten Zustand kleineren lichten Hülsenquerschnitts vercrimpbar ist. In der vercrimpten Gebrauchsstellung spannt die Quetschhülse 6 das Schlauchende des Schlauches 2 zwischen sich und dem Anschlussnippel 5 in Nippel-Längsrichtung unverrückbar ein. Am Schlauchanschluss 3 sind zumindest zwei, auf gegenüberliegenden Seiten des Schlauchanschlusses 3 angeordnete Werkzeugangriffsflächen vorgesehen, die erfindungsgemäß an der Quetschhülse 6 angeordnet sind. Die zumindest zwei Werkzeugangriffsflächen sind in einem Abschnitt der Quetschhülse 6 angeordnet, in welchem die Quetschhülse 6 das Schlauchende des Schlauches 2 vollumfänglich umhüllt. Dabei sind die zumindest zwei Werkzeugangriffsflächen ohne ein Abformen des Anschlussnippels allein als beim Vercrimpen der Quetschhülse 6 am Anschlussstück 4 gebildete Verformungen oder Einformungen der Quetschhülse 6 ausgestaltet. Diese Werkzeugangriffsflächen sind einander paarweise zugeordnet und vorzugsweise als Schlüsselangriffsflächen 7 ausgebildet. An diesen Schlüsselangriffsflächen 7 kann ein Maulschlüssel oder Ringschlüssel -, aber auch jedes andere geeignete Werkzeug, wie beispielsweise eine Wasserrohrzange, angesetzt werden. Da diese Schlüsselangriffsflächen 7 an der Quetschhülse 6 vorgesehen sind, kann der von der Quetschhülse 6 umschlossene Teilbereich des Anschlussstückes 4 unmittelbar an die am Anschlussstück befindliche Schlauchverbindung angrenzen, ohne dass dazwischen ein von der Quetschhülse 6 freigehaltener Teilbereich des Anschlussstückes 4 notwendig ist. Der Schlauchanschluss 3 kann daher vergleichsweis kurz und platzsparend ausgestaltet werden. Darüber hinaus wird der Abstand zwischen der am Anschlussstück 4 vorgesehenen Schlauchverbindung der Schlauchleitung 1, 10 einerseits und dem Schlauch 2 andererseits vergleichsweise gering gehalten, was die Montage vereinfacht. Da der Schlauchanschluss 3 vergleichsweise kurz dimensioniert werden kann, lässt sich der minimale Biegeradius der Schlauchleitung 1, 10 vergleichsweise klein halten, was die vielseitige Einsetzbarkeit dieser Schlauchleitungen 1, 10 begünstigt.

Eine hier nicht dargestellte Ausführungsform kann darin bestehen, dass die zumindest zwei Schlüsselangriffsflächen 7 sich über mehr als die Hälfte der Längserstreckung und vorzugsweise über die gesamte Längserstreckung der Quetschhülse 6 erstrecken. Bei einer ebenfalls nicht dargestellten Ausführungsform können die zumindest zwei Schlüsselangriffsflächen in einem unvercrimpten Teilbereich der Quetschhülse 6 angeordnet sein.

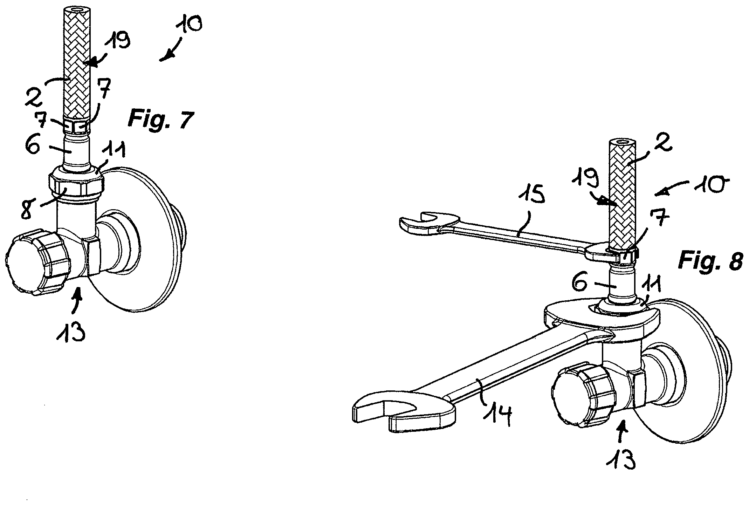

Bei den in den Figuren 1 bis 12 dargestellten Ausführungen 1, 10 der Schlauchleitung sind die zumindest zwei Schlüsselangriffsflächen 7 demgegenüber in einem vercrimpten Teilbereich der Quetschhülse 6 angeordnet. Dabei werden die Schlüsselangriffsflächen 7 während des Vercrimpens der Quetschhülse 6 in diese eingeformt. Während bei der Schlauchleitung 10 gemäß den Figuren 7 bis 12 die Schlüsselangriffsflächen 7 in einem das schlauchseitige Hülsenende bildenden Teilbereich der Quetschhülse vorgesehen sind, sind die Schlüsselangriffsflächen 7 bei der Schlauchleitung 1 in Längserstreckung der Quetschhülse 6 etwa mittig platziert. Während an der Quetschhülse 6 der Schlauchleitung 1 nur zwei einander paarweise zugeordnete Schlüsselangriffsflächen 7 vorgesehen sind, hat die Quetschhülse 6 der Schlauchleitung 10 drei Paare einander zugeordneter Schlüsselangriffsflächen 7, die in einer gemeinsamen Querschnittsebene der Quetschhülse angeordnet sind und von denen benachbarte Schlüsselangriffsflächen 7 jeweils einen Winkel von 60° einschließen.

Die Schlauchleitungen 1, 10 weisen auch in einem von der Quetschhülse 6 freigehaltenen Teilbereich ihres Schlauchanschlusses zwei einander paarweise zugeordnete Schlüsselangriffsflächen 8 auf. Da zumindest der hier gezeigte Schlauchanschluss 3 der Schlauchleitungen 1, 10 als Schraubverbindung ausgebildet ist, ist an deren Anschlussstück 4 ein Ringabsatz 9 vorgesehen, den eine Überwurfmutter 11 hintergreift. Diese Überwurfmutter 11 trägt außenumfangsseitig die zumindest zwei einander paarweise zugeordneten Schlüsselangriffsflächen 8. Die Überwurfmutter 11 hat innenumfangsseitig ein Innengewinde 12, das auf ein Außengewinde eines benachbarten Leitungsabschnitts, beispielsweise eines wandseitigen Eckventiles 13, aufgeschraubt werden kann. Zum Aufschrauben oder Lösen der Schraubverbindung kann an den Schlüsselangriffsflächen 8 der Überwurfmutter 11 ein Maulschlüssel 14 angesetzt werden. Damit dabei das Anschlussstück 4 nicht mitdrehen kann und damit dabei nicht ein unerwünschter Drall in Umdrehungsrichtung des Schlauches 2 auf diesen einwirkt, ist an den Schlüsselangriffsflächen 7 der Quetschhülse 6 ein als Konterwerkzeug dienender Maulschlüssel 15 ansetzbar. Die Schläuche 2, 16 der hier dargestellten Schlauchleitungen 1, 10, 17 sind mehrlagig ausgebildet und weisen einen Innenschlauch 18 aus elastisch biegbarem Material auf, den ein schützendes Metallgeflecht 19 umhüllt.

### Bezugszeichenliste

- 1: Schlauchleitung (gemäß den Figuren 1 bis 6)
- 2: Schlauch
- 3: Schlauchanschluss
- 4: Anschlussstück
- 5: Anschlussnippel
- 6: Quetschhülse
- 7: Schlüsselangriffsflächen
- 8: Schlüsselangriffsflächen
- 9: Ringabsatz
- 10: Schlauchleitung (gemäß den Figuren 7 bis 12)
- 11: Überwurfmutter
- 12: Innengewinde
- 13: Eckventil
- 14: Maulschlüssel
- 15: Maulschlüssel
- 16: Schlauch
- 17: Schlauchleitung (gemäß den Figuren 13 bis 16)
- 18: Innenschlauch
- 19: Metallgeflecht
- 20: Anschlussnippel
- 21: Quetschhülse
- 22: Ringabsatz
- 23: Überwurfmutter
- 24: Schlüsselangriffsfläche
- 25: Schlüsselangriffsfläche

## Patentansprüche

1. Schlauchleitung (1) mit einem flexiblen Schlauch (2) sowie mit zumindest einem Schlauchanschluss (3), der ein Anschlussstück (4) mit einem Anschlussnippel (5) aufweist, auf welchen Anschlussnippel (5) ein Schlauchende des flexiblen Schlauches (2) aufgeschoben ist, und der eine Quetschhülse (6) hat, die das Schlauchende zwischen sich und dem Anschlussnippel (5) in Nippel-Längsrichtung unverrückbar einspannt, wobei der Schlauchanschluss (3) zumindest zwei, auf gegenüberliegenden Seiten des Schlauchanschlusses (3) an der Quetschhülse (6) angeordnete Werkzeugangriffsflächen (7) aufweist, wobei die zumindest zwei Werkzeugangriffsflächen (7) ohne ein Abformen des Anschlussnippels (5) allein als beim Vercrimpen der Quetschhülse (6) am Anschlussstück (4) gebildete Verformungen oder Einformungen der Quetschhülse (6) ausgestaltet sind, wobei die zumindest zwei Werkzeugangriffsflächen (7) in einem Abschnitt der Quetschhülse (6) angeordnet sind, in welchem die Quetschhülse (6) das Schlauchende vollumfänglich umhüllt, und wobei das elastische Material des innenseitig an der Quetschhülse (6) anliegenden Schlauchendes die durch die Verformungen und Einformungen der Quetschhülse (6) beim Vercrimpen gebildeten Querschnittsänderungen abfängt und aufnimmt, ohne dass die Quetschhülse (6) sich am Anschlussnippel (5) des Anschlussstückes (4) abformen muss, wobei
- die zumindest zwei Werkzeugangriffsflächen einander paarweise zugeordnet und als Schlüsselangriffsflächen (7) für einen Maulschlüssel ausgestaltet sind, **dadurch gekennzeichnet,**
- **dass** die zumindest zwei Werkzeugangriffsflächen (7) sich über mehr als die Hälfte der Längserstreckung der Quetschhülse (6) erstrecken.

2. Schlauchleitung nach Anspruch 1, **dadurch gekennzeichnet, dass** die zumindest zwei Werkzeugangriffsflächen (7) sich über die gesamte Längserstreckung der Quetschhülse (6) erstrecken.

3. Schlauchleitung nach Anspruch 1 oder 2, **dadurch gekennzeichnet, dass** der die zumindest zwei Werkzeugangriffsflächen (7) aufweisende Teilbereich der Quetschhülse (6) deren schlauchseitiges Hülsenende bildet.

4. Schlauchleitung nach einem der Ansprüche 1 bis 3, **dadurch gekennzeichnet, dass** wenigstens zwei und vorzugsweise drei Paare einander zugeordneter und in einer gemeinsamen Querschnittsebene der Quetschhülse (6) angeordneter Werkzeugangriffsflächen (7) vorgesehen sind.

5. Schlauchleitung nach Anspruch 4, **dadurch gekennzeichnet, dass** benachbarte Werkzeugangriffsflächen (7) einen Winkel von 60° oder von 90° einschließen.

6. Schlauchleitung nach einem der Ansprüche 1 bis 5, **dadurch gekennzeichnet, dass** der Schlauchanschluss (3) in einem von der Quetschhülse (6) freigehaltenen Teilbereich zumindest zwei einander paarweise zugeordnete und insbesondere als Schlüsselangriffsflächen ausgestaltete Werkzeugangriffsflächen (8) hat.

7. Schlauchleitung nach Anspruch 6, **dadurch gekennzeichnet, dass** am Anschlussstück (4) ein Ringabsatz (9) vorgesehen ist, den eine Überwurfmutter (11) hintergreift, und dass die Überwurfmutter (11) außenumfangsseitig die zumindest zwei einander paarweise zugeordneten Werkzeugangriffsflächen (8) hat.

8. Schlauchleitung nach einem der Ansprüche 1 bis 7, **dadurch gekennzeichnet, dass** der Schlauch mehrlagig ausgebildet ist und dass zumindest ein Innenschlauch (18) vorgesehen ist, den ein Geflecht und insbesondere ein Metallgeflecht (19) umhüllt.

9. Verfahren zur Herstellung einer Schlauchleitung gemäß einem der Ansprüche 1 bis 8, mit einem hülsenförmigen Anschlussstück (4), dessen eines Hülsenende als Anschlussnippel (5) ausgebildet ist, auf den ein Schlauchende eines flexiblen Schlauches (2) aufgeschoben wird, bevor das auf den Anschlussnippel (4) aufgeschobene Schlauchende durch Vercrimpen einer Quetschhülse (6) gesichert wird, **dadurch gekennzeichnet, dass** die Quetschhülse (6) beim Vercrimpen ohne ein Abformen des Anschlussnippels (5) derart verformt wird, dass sich auf gegenüberliegenden Seiten zumindest zwei Werkzeugangriffsflächen (7) bilden, und dass die zumindest zwei Werkzeugangriffsflächen in einem vercrimpten Teilbereich der Quetschhülse angeordnet sind, derart, dass dieser vercrimpte Teilbereich der Quetschhülse das Schlauchende über die Längserstreckung dieses vercrimpten Teilbereiches hinweg vollumfänglich umhüllt.

10. Verfahren nach Anspruch 9, **dadurch gekennzeichnet, dass** die Werkzeugangriffsflächen (7) vor dem Vercrimpen in einen nicht zu vercrimpenden Teilbereich der Quetschhülse (6) eingeformt werden.

11. Verfahren nach Anspruch 10, **dadurch gekennzeichnet, dass** die Werkzeugangriffsflächen (7) beim Vercrimpen wenigstens bereichsweise in einen vercrimpten Teilbereich der Quetschhülse (6) eingeformt werden.

12. Verfahren nach einem der Ansprüche 9 bis 11, **dadurch gekennzeichnet, dass** die Werkzeugangriffsflächen (7) als einander paarweise zugeordnete Schlüsselangriffsflächen ausgebildet oder ausgeformt werden.

## Claims

1. Hose line (1) having a flexible hose (2) and also having at least one hose connector (3) which has a connection piece (4) with a connection nipple (5), onto which connection nipple (5) a hose end of the flexible hose (2) is pushed, and which has a crimp sleeve (6) which clamps the hose end between itself and the connection nipple (5) in an immovable manner in the longitudinal direction of the nipple, wherein the hose connector (3) has at least two tool engagement surfaces (7) that are arranged on the crimp sleeve (6) on opposite sides of the hose connector (3), wherein the at least two tool engagement surfaces (7) are configured only as deformations or indentations of the crimp sleeve (6) that are formed during the crimping of the crimp sleeve (6) on the connection piece (4), without molding of the connection nipple (5), wherein the at least two tool engagement surfaces (7) are arranged in a portion of the crimp sleeve (6) in which the crimp sleeve (6) fully encases the hose end, and wherein the elastic material of the hose end bearing against the inner side of the crimp sleeve (6) absorbs and takes up the changes in cross section formed by the deformations and indentations of the crimp sleeve (6) during crimping, without the crimp sleeve (6) having to mould itself to the connection nipple (5) of the connection piece (4), wherein
- the at least two tool engagement surfaces are assigned to one another in pairs and are configured as wrench engagement surfaces (7) for an open-end wrench, **characterized**
- **in that** the at least two tool engagement surfaces (7) extend along more than half the longitudinal extent of the crimp sleeve (6).

2. Hose line according to Claim 1, **characterized in that** the at least two tool engagement surfaces (7) extend along the entire longitudinal extent of the crimp sleeve (6).

3. Hose line according to Claim 1 or 2, **characterized in that** that subregion of the crimp sleeve (6) that has the at least two tool engagement surfaces (7) forms the hose-side sleeve end of said crimp sleeve (6).

4. Hose line according to one of Claims 1 to 3, **characterized in that** at least two and preferably three pairs of tool engagement surfaces (7) that are assigned to one another and are arranged in a common cross-sectional plane of the crimp sleeve (6) are provided.

5. Hose line according to Claim 4, **characterized in that** adjacent tool engagement surfaces (7) enclose an angle of 60° or 90°.

6. Hose line according to one of Claims 1 to 5, **characterized in that** the hose connector (3) has at least two tool engagement surfaces (8) that are assigned to one another in pairs and are configured in particular as wrench engagement surfaces in a subregion that is kept free of the crimp sleeve (6).

7. Hose line according to Claim 6, **characterized in that** an annular shoulder (9) is provided on the connection piece (4), a union nut (11) engaging behind said annular shoulder (9), and **in that** the union nut (11) has the at least two tool engagement surfaces (8) that are assigned to one another in pairs on its outer circumference.

8. Hose line according to one of Claims 1 to 7, **characterized in that** the hose is configured in a multilayer manner, and **in that** provision is made of at least an inner hose (18) which encases a mesh and in particular a metal mesh (19).

9. Method for producing a hose line according to one of Claims 1 to 8, having a sleeve-like connection piece (4), one sleeve end of which is configured as a connection nipple (5) onto which a hose end of a flexible hose (2) is pushed before the hose end pushed onto the connection nipple (4) is secured by crimping a crimp sleeve (6), **characterized in that** the crimp sleeve (6) is deformed during crimping, without molding of the connection nipple (5), such that at least two tool engagement surfaces (7) are formed on opposite sides, and **in that** the at least two tool engagement surfaces are arranged in a crimped subregion of the crimp sleeve, such that this crimped subregion of the crimp sleeve fully encases the hose end along the entire longitudinal extent of this crimped subregion.

10. Method according to Claim 9, **characterized in that**, prior to crimping, the tool engagement surfaces (7) are indented into a subregion of the crimp sleeve (6) that is not to be crimped.

11. Method according to Claim 10, **characterized in that**, during crimping, the tool engagement surfaces (7) are indented at least regionally into a crimped subregion of the crimp sleeve (6).

12. Method according to one of Claims 9 to 11, **characterized in that** the tool engagement surfaces (7) are configured or embodied as wrench engagement surfaces that are assigned to one another in pairs.

## Revendications

1. Conduite flexible (1) avec un tuyau flexible (2) ainsi qu'avec au moins un raccord de tuyau (3), qui présente une pièce de raccord (4) avec un mamelon de raccord (5), mamelon de raccord (5) sur lequel est engagée une extrémité de tuyau du tuyau flexible (2), et qui comprend une douille à sertir (6), qui serre l'extrémité de tuyau entre elle-même et le mamelon de raccord (5) de façon inamovible dans la direction longitudinale du mamelon, dans laquelle le raccord de tuyau (3) présente sur des côtés opposés du raccord de tuyau (3) au moins deux faces d'application d'outil (7) disposées sur la douille à sertir (6), dans laquelle lesdites au moins deux faces d'application d'outil (7) sont configurées, sans surmoulage du mamelon de raccord (5), uniquement comme des déformations ou des formations de la douille à sertir (6) formées lors du sertissage de la douille à sertir (6) sur la pièce de raccord (4), dans laquelle lesdites au moins deux faces d'application d'outil (7) sont disposées dans une partie de la douille à sertir (6), dans laquelle la douille à sertir (6) entoure complètement l'extrémité de tuyau, et dans laquelle le matériau élastique de l'extrémité de tuyau appliquée intérieurement sur la douille à sertir (6) absorbe et reprend les variations de section transversale causées par les déformations et les formations de la douille à sertir (6) lors du sertissage sans que la douille à sertir (6) doive se mouler sur le mamelon de raccord (5) de la pièce de raccord (4), dans laquelle
- lesdites au moins deux faces d'application d'outil sont disposées par paires l'une avec l'autre et sont réalisées sous la forme de faces d'application de clé (7) pour une clé à fourche,
**caractérisée en ce que**
- lesdites au moins deux faces d'application d'outil (7) s'étendent sur plus de la moitié de l'extension longitudinale de la douille à sertir (6).

2. Conduite flexible selon la revendication 1, **caractérisée en ce que** lesdites au moins deux faces d'application d'outil (7) s'étendent sur plus que toute l'extension longitudinale de la douille à sertir (6).

3. Conduite flexible selon la revendication 1 ou 2, **caractérisée en ce que** la région partielle de la douille à sertir (6) présentant lesdites au moins deux faces d'application d'outil (7) forment son extrémité de douille côté tuyau flexible.

4. Conduite flexible selon l'une quelconque des revendications 1 à 3, **caractérisée en ce qu'**il est prévu au moins deux et de préférence trois paires de faces d'application d'outil (7) associées l'une à l'autre et disposées dans un plan de section transversale commun de la douille à sertir (6).

5. Conduite flexible selon la revendication 4, **caractérisée en ce que** des faces d'application d'outil voisines (7) forment un angle de 60° ou de 90°.

6. Conduite flexible selon l'une quelconque des revendications 1 à 5, **caractérisée en ce que** le raccord de tuyau (3) présente dans une région partielle laissée libre par la douille à sertir (6) au moins deux faces d'application d'outil (8) associées par paires l'une à l'autre et en particulier réalisées sous la forme de faces d'application de clé.

7. Conduite flexible selon la revendication 6, **caractérisée en ce qu'**il est prévu sur la pièce de raccordement (4) un épaulement annulaire (9), qu'un écrou-raccord (11) accroche à l'arrière, et **en ce que** l'écrou-raccord (11) présente en périphérie extérieure lesdites au moins deux faces d'application d'outil (8) associées par paires l'une à l'autre.

8. Conduite flexible selon l'une quelconque des revendications 1 à 7, **caractérisée en ce que** le tuyau flexible est réalisé à plusieurs couches et **en ce qu'**il est prévu au moins un tuyau flexible intérieur (18), qu'entoure un tressage et en particulier un tressage métallique (19).

9. Procédé de fabrication d'une conduite flexible selon l'une quelconque des revendications 1 à 8, avec une pièce de raccord (4) en forme de douille, dont une extrémité de douille est réalisée sous la forme de mamelon de raccord (5) sur lequel une extrémité de tuyau d'un tuyau flexible (2) est engagée, avant que l'extrémité de tuyau engagée sur le mamelon de raccord (4) soit immobilisée par sertissage d'une douille à sertir (6), **caractérisé en ce que** l'on déforme la douille à sertir (6) lors du sertissage sans un surmoulage du mamelon de raccord (5), de telle manière qu'il se forme sur des côtés opposés au moins deux faces d'application d'outil (7), et **en ce que** lesdites au moins deux faces d'application d'outil sont disposées dans une région sertie de la douille à sertir, de telle manière que cette région partielle sertie de la douille à sertir entoure complètement l'extrémité de tuyau tout au long de l'extension longitudinale de cette région partielle sertie.

10. Procédé selon la revendication 9, **caractérisé en ce que** l'on forme les faces d'application d'outil (7) avant le sertissage dans une région partielle de la douille à sertir (6) qui ne doit pas être sertie.

11. Procédé selon la revendication 10, **caractérisé en ce que** l'on forme les faces d'application d'outil (7) lors du sertissage au moins localement dans une région partielle sertie de la douille à sertir (6).

12. Procédé selon l'une quelconque des revendications 9 à 11, **caractérisé en ce que** l'on réalise ou on forme les faces d'application d'outil (7) sous la forme de faces d'application de clé associées l'une à l'autre par paires.
